# EUROPEAN PATENT APPLICATION

(11) **EP 3 845 786 A1**
(43) Date of publication of application: **07.07.2021**
(21) Application number: 19854008.0
(22) Date of filing: 09.08.2019
(51) Int. Cl.: F16J 15/447, F16C 19/18, F16C 33/78, F16J 15/3232

(54) **SEALING DEVICE**

(30) Priority: 28.08.2018 JP 2018159413
(71) Applicant: NOK Corporation, Minato-ku, Tokyo 105-8585 (JP)
(72) Inventor: SEKI, Masahiro, Fukushima-shi, Fukushima 960-1193 (JP); SAKANO, Yuya, Fukushima-shi, Fukushima 960-1193 (JP); ISAWA, Toshiki, Fukushima-shi, Fukushima 960-1193 (JP)
(74) Representative: Global IP Europe Patentanwaltskanzlei
(86) International application number: PCT/JP2019/031760
(87) International publication number: WO 2020/045071

(57) **Abstract**

A sealing device disposed between inner and outer members that rotate relative to each other for sealing a gap between the inner and outer members, includes a first sealing member to be mounted on the outer member and a second sealing member to be mounted on the inner member. Water-discharging protrusions protrude in a space between the second sealing member and the first sealing member. The water-discharging protrusions are arranged in a circumferential direction. Each protrusion has an inclined side surface intersecting at an acute angle with a rotational direction in which at least one of the inner and outer members rotates. The first sealing member has an annular labyrinth lip protruding toward the flange part of the second sealing member and is not in contact with the second sealing member, the labyrinth lip overlapping the water-discharging protrusions in radial directions and being disposed radially inside the water-discharging protrusions.

## Description

The present invention relates to sealing devices.

### BACKGROUND ART

Rolling bearings, such as ball bearings, are well known, and are used, for example, in hubs of automotive vehicles. A sealing device for sealing the inside of a rolling bearing is disclosed in Patent Document 1. The sealing device includes an annular body fixed to the outer race of the rolling bearing, a radial lip (grease lip) extending radially inward from the annular body, and two side lips (axial lips) extending laterally from the annular body. The radial lip is in contact with the outer peripheral surface of the inner race of the bearing or the outer peripheral surface of a part fixed to the inner race, and has a function of sealing lubricant (grease) inside the bearing, whereas the two side lips are in contact with a flange of the inner race, and have a function of sealing so that foreign matter, such as water and dust, does not penetrate from the outside to the inside of the bearing.

### BACKGROUND DOCUMENTS

### Patent Document

Patent Document 1: JP-B-3991200

### SUMMARY OF THE INVENTION

For this type of sealing device, there is a demand to improve the ability to seal against intrusion of foreign matter, and there is also a demand to reduce torque applied to the rotational shaft.

In addition, for this type of sealing device, there is a demand to improve the function of preventing intrusion of water (including muddy water or salt water) into the inside of the sealed object (e.g., bearing) if the sealing device is used in a watery environment. Even if water does enter the sealing device, it is desirable for the water to be discharged rapidly.

Accordingly, the present invention provides a sealing device having superior ability to seal against intrusion of foreign matter, applying low torque to a rotational member, and having superior ability to discharge water and superior ability to protect the sealed object from water.

A sealing device according to an aspect of the present invention is a sealing device disposed between an inner member and an outer member that rotate relative to each other for sealing a gap between the inner member and the outer member, the sealing device including: a first sealing member to be mounted on the outer member, the first sealing member including an annular part expanding radially inward toward the inner member; and a second sealing member to be mounted on the inner member, the second sealing member including a flange part expanding radially outward and facing the annular part of the first sealing member, multiple water-discharging protrusions being supported by at least one of the first sealing member and the second sealing member, the multiple water-discharging protrusions protruding in a space located between the annular part of the first sealing member and the flange part of the second sealing member and being arranged in a circumferential direction, each water-discharging protrusion including an inclined side surface intersecting at an acute angle with a rotational direction in which at least one of the inner member and the outer member rotates, the first sealing member including an annular labyrinth lip protruding from the annular part toward the flange part of the second sealing member and being not in contact with the second sealing member, the labyrinth lip overlapping the multiple water-discharging protrusions in radial directions and being disposed radially inside the multiple water-discharging protrusions.

In this sealing device, water may enter the space between the annular part of the first sealing member and the flange part of the second sealing member. However, multiple water-discharging protrusions protrude in the space, and each water-discharging protrusion has an inclined side surface that intersects at an acute angle with the rotational direction in which at least one of the inner member and the outer member rotates. Therefore, together with relative rotation of the inner member and the outer member, the water in the space flows in the opposite direction along the inclined side surface and is rapidly discharged from the space. For this reason, the sealing device has superior ability to protect the sealed object from water. Furthermore, since the multiple water-discharging protrusions protrude into the space between the annular part of the first sealing member and the flange part of the second sealing member, it is not necessary to enlarge the sealing device for the water-discharging protrusions. A labyrinth lip is disposed in the space between the annular part of the first sealing member and the flange part of the second sealing member to prevent foreign matter from entering from the outside. Since the labyrinth lip overlaps with the multiple water-discharging protrusions in radial directions, the intrusion route for foreign matter from the outside is complicated, and the ability for sealing against foreign matter is enhanced. The labyrinth lip is provided at the first sealing member and is not in contact with the second sealing member. Therefore, the torque applied to the rotational member, i.e., at least one of the inner member and the outer member, is small. The labyrinth lip is disposed radially inside the multiple water-discharging protrusions, and the foreign matter blocked by the labyrinth lip is discharged from the space along the inclined side surface of the water-discharging protrusion along with the relative rotation of the inner member and the outer member.

### BRIEF DESCRIPTION OF THE DRAWINGS

Fig. 1 is a partial cross-sectional view of an example of a rolling bearing in which a sealing device according to any one of the embodiments of the present invention is used;
Fig. 2 is a partial cross-sectional view of a sealing device according to a first embodiment of the present invention:
Fig. 3 is a front view of a second sealing member of the sealing device according to the first embodiment;
Fig. 4 is a cross-sectional view taken along line IV-IV in Fig. 3;
Fig. 5 is a perspective view of the second sealing member of the sealing device according to the first embodiment;
Fig. 6 is a diagram showing advantages of the sealing device according to the first embodiment at the time of rotation of the second sealing member;
Fig. 7 is a diagram showing advantages of the sealing device according to the first embodiment at the time of rotation stop of the second sealing member;
Fig. 8 is a partial cross-sectional view of a sealing device according to a second embodiment of the present invention;
Fig. 9 is a front view of a second sealing member of the sealing device according to the second embodiment;
Fig. 10 is a cross-sectional view taken along line X-X in Fig. 3;
Fig. 11 is a diagram showing advantages of the sealing device according to the second embodiment at the time of rotation of the second sealing member;
Fig. 12 is a diagram showing advantages of the sealing device according to the second embodiment at the time of rotation stop of the second sealing member;
Fig. 13 is a front view of a second sealing member of the sealing device according to a third embodiment of the present invention;
Fig. 14 is a partial cross-sectional view of a sealing structure according to a fourth embodiment of the present invention;
Fig. 15 is a partial cross-sectional view of a sealing device according to a modification of the first embodiment; and
Fig. 16 is a partial cross-sectional view of a sealing structure according to a modification of the fourth embodiment.

### DESCRIPTION OF EMBODIMENTS

Hereinafter, with reference to the accompanying drawings, multiple embodiments according to the present invention will be described. It is to be noted that the drawings are not necessarily to scale, and certain features may be shown exaggerated or omitted.

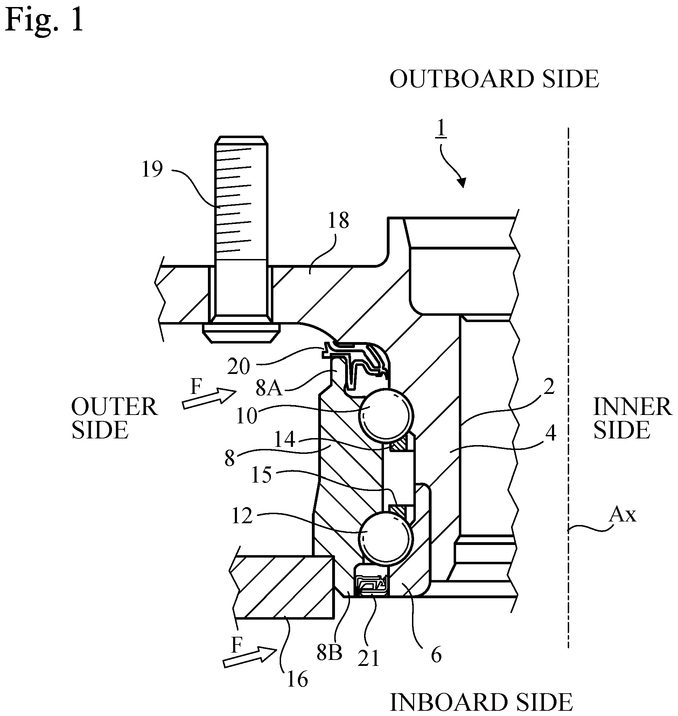

Fig. 1 shows a hub bearing for an automotive vehicle, which is an example of a rolling bearing, in which a sealing device according to any one of the embodiments of the present invention is used. However, the use of the present invention is not limited to hub bearings, and the present invention can also be applied to other rolling bearings. In the following description, the hub bearing is a ball bearing. However, the use of the present invention is not limited to ball bearings, and the present invention can also be applied to other rolling bearings, such as roller bearings and needle bearings, having other types of rolling elements. The present invention is also applicable to rolling bearings used in machines other than automotive vehicles.

The hub bearing 1 includes a hub (inner member) 4 having a hole 2 into which a spindle (not shown) is inserted, an inner race (inner member) 6 attached to the hub 4, an outer race (outer member) 8 located outside of the hub 4 and the inner race 6, multiple balls 10 arranged in a row between the hub 4 and the outer race 8, multiple balls 12 arranged in a row between the inner race 6 and the outer race 8, and multiple retainers 14 and 15 for retaining the balls in place.

Whereas the outer race 8 is stationary, the hub 4 and the inner race 6 rotate as the spindle rotates.

The common central axis Ax of the spindle and hub bearing 1 extends in the vertical direction in Fig. 1. In Fig. 1, only the left part with respect to the central axis Ax is shown. Although not shown in detail, the upper side of Fig. 1 is the outer side (outboard side) of the automotive vehicle on which the wheels are arranged, whereas the lower side is the inner side (inboard side) on which the differential gears are arranged. The outer side and the inner side shown in Fig. 1 mean the outer side and the inner side in radial directions, respectively.

The outer race 8 of the hub bearing 1 is fixed to the hub knuckle 16. The hub 4 has an outboard side flange 18 extending further outward in radial directions than the outer race 8. A wheel can be attached to the outboard side flange 18 by hub bolts 19.

A sealing device 20 that seals the gap between the outer race 8 and the hub 4 is located near the end of the outer race 8 on the outboard side, and inside the end of the outer race 8 on the inboard side. Another sealing device 21 that seals the gap between the outer race 8 and the inner race 6 is located inside the end of the inner side of the outer race 8. The function of the sealing devices 20 and 21 prevents the grease, that is, the lubricant, from flowing out from the inside of the hub bearing 1 and prevents foreign matter (water, including muddy water or salt water) from entering the inside of the hub bearing 1 from the outside. In Fig. 1, each arrow F indicates an example of the direction of foreign matter flow from the outside.

The sealing device 20 is located between the rotating hub 4 and the cylindrical end portion 8A on the outboard side of the stationary outer race 8 of the hub bearing 1 to seal the gap between the hub 4 and the outer race 8. The sealing device 21 is located between the rotating inner race 6 and the end portion 8B on the inboard side of the outer race 8 of the hub bearing 1 to seal the gap between the inner race 6 and the outer race 8.

### FIRST EMBODIMENT

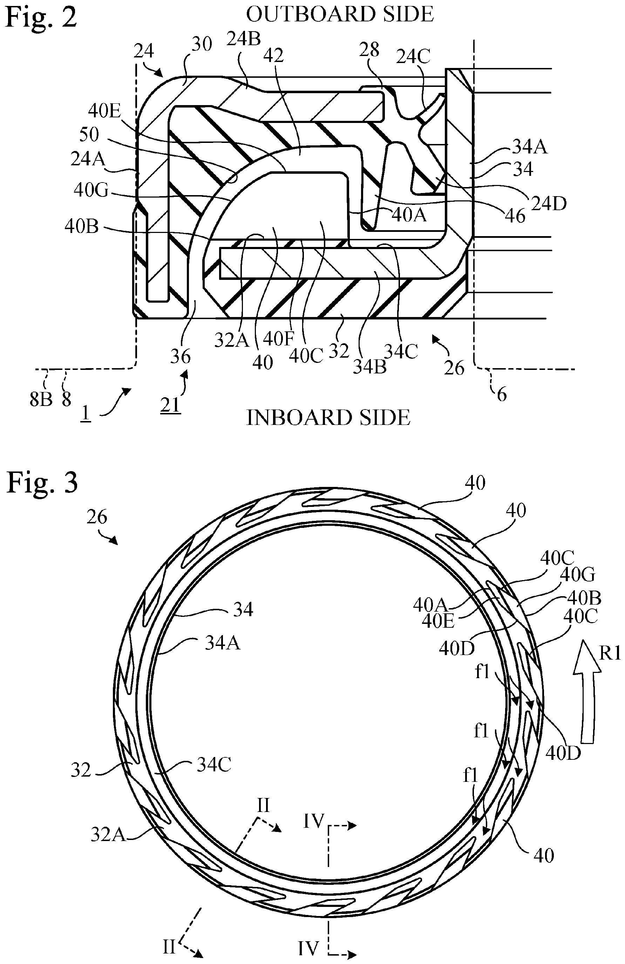

As shown in Fig. 2, the sealing device 21 is located in a gap between the end portion 8B on the inboard side of the outer race 8 of the hub bearing 1 and the inner race 6 of the hub bearing 1. Although the sealing device 21 has an annular shape, only the left part is shown in Fig. 2. As is apparent from Fig. 2, the sealing device 21 has a composite structure including a first sealing member 24 and a second sealing member 26.

The first sealing member 24 is a stationary sealing member that is attached to the outer race 8 and does not rotate. The first sealing member 24 is of a composite structure having an elastic ring 28 and a rigid ring 30. The elastic ring 28 is made of an elastic material such as an elastomer. The rigid ring 30 is made of a rigid material such as metal, and reinforces the elastic ring 28. The rigid ring 30 has a substantially L-shaped cross-sectional shape. A part of the rigid ring 30 is embedded in the elastic ring 28 and is in close contact with the elastic ring 28.

The first sealing member 24 has a cylindrical part 24A, an annular part 24B, and radial lips 24C and 24D. The cylindrical part 24A constitutes a mounted part that is mounted on the outer race 8. Specifically, the cylindrical part 24A is engaged by interference fit (that is, is press-fitted) into the end portion 8B of the outer race 8. The annular part 24B, which has an annular shape, is located radially inside the cylindrical part 24A, and expands radially inward toward the inner race 6. The cylindrical part 24A and the annular part 24B are formed of the rigid ring 30 and the elastic ring 28.

The radial lips 24C and 24D extend from the inner end of the annular part 24B toward the second sealing member 26, and the distal ends of the radial lips 24C and 24D are in contact with the second sealing member 26. The radial lips 24C and 24D are formed of the elastic ring 28.

The second sealing member 26 can also be called a slinger, that is, a rotational sealing member. The second sealing member 26 is mounted on the inner race 6, and when the inner race 6 rotates, the second sealing member 26 rotates together with the inner race 6 and deflects foreign matter that was splashed and comes from the outside.

In this embodiment, the second sealing member 26 is also of a composite structure having an elastic ring 32 and a rigid ring 34. The rigid ring 34 is made of a rigid material such as a metal.

The rigid ring 34 has a substantially L-shaped cross-sectional shape. Specifically, the rigid ring 34 includes a cylindrical sleeve part 34A and an annular flange part 34B extending radially outward from the sleeve part 34A. The sleeve part 34A constitutes a mounted part that is mounted on the inner race 6. Specifically, an end portion of the inner race 6 is engaged by interference fit (that is, is press-fitted) into the sleeve part 34A.

The flange part 34B is located radially outside the sleeve part 34A, expands radially outward, and faces the annular part 24B of the first sealing member 24. In this embodiment, the flange part 34B is a flat plate and lies on a plane perpendicular to the axis of the sleeve part 34A.

The elastic ring 32 is in close contact with the flange part 34B of the rigid ring 34. In this embodiment, the elastic ring 32 is provided for measuring the rotation speed of the inner race 6. Specifically, the elastic ring 32 is formed of an elastomer material containing magnetic metal powder and ceramic powder, and has a large number of S poles and N poles by the magnetic metal powder. In the elastic ring 32, a large number of S poles and N poles are alternately arranged at equiangular intervals in the circumferential direction. The rotation angle of the elastic ring 32 can be measured by a magnetic rotary encoder (not shown). Since the material of the elastic ring 32 contains metal powder, it has a higher degree of hardness than that of normal elastomer materials and is not easily damaged by foreign matter.

The radial lip 24C of the first sealing member 24 is a grease lip extending radially inward from the inner end of the annular part 24B. The grease lip 24C extends toward the sleeve part 34A of the second sealing member 26, and the distal end of the grease lip 24C is in contact with the sleeve part 34A. The grease lip 24C extends radially inward and toward the outboard side, and plays a main role in preventing the lubricant from flowing out from the inside of the hub bearing 1.

The radial lip 24D is a dust lip extending laterally from the inner end of the annular part 24B. The dust lip 24D extends radially outward and toward the inboard side. The dust lip 24D also extends toward the sleeve part 34A of the second sealing member 26, and the distal end of the dust lip 24D is in contact with the sleeve part 34A. The dust lip 24D plays a main role in preventing foreign matter from flowing into the hub bearing 1 from the outside.

Whereas the first sealing member 24 is attached to the stationary outer race 8, the inner race 6 and the second sealing member 26 rotate, each of the radial lips 24C and 24D slide on the sleeve part 34A of the second sealing member 26.

An annular clearance 36 is provided between the distal end on the inboard side of the cylindrical part 24A of the first sealing member 24 and the outer end edge of the second sealing member 26. Through the clearance 36, foreign matter may enter a space 42 between the annular part 24B of the first sealing member 24 and the flange part 34B of the second sealing member 26. Conversely, foreign matter in the space 42 can be discharged through the clearance 36.

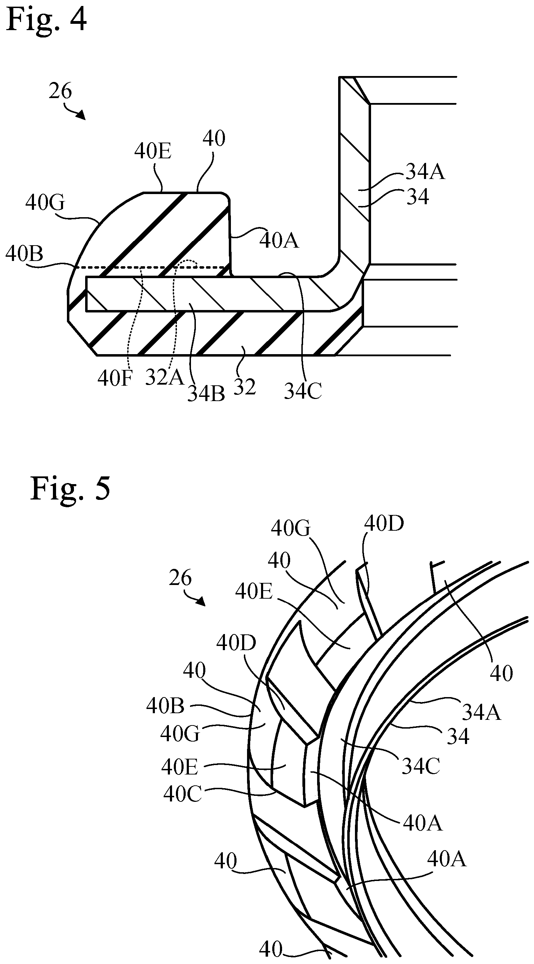

Fig. 3 is a front view of the second sealing member 26, and Fig. 4 is a cross-sectional view taken along line IV-IV in Fig. 3. Fig. 2 is a cross-sectional view of the sealing device 21 taken along line II-II in Fig. 3. Fig. 5 is a perspective view of the second sealing member 26.

As shown in Figs. 2 to 5, multiple water-discharging protrusions 40, which protrude toward the annular part 24B of the first sealing member 24, are supported by the second sealing member 26. The water-discharging protrusions 40 have the same shape and the same size, and are arranged at equiangular intervals in the circumferential direction. As shown in Fig. 2, the water-discharging protrusions 40 protrude into the space 42 between the annular part 24B of the first sealing member 24 and the flange part 34B of the second sealing member 26.

In this embodiment, the multiple water-discharging protrusions 40 are integrally mounted on a portion of the elastic ring 32 that covers a surface 34C of the flange part 34B that faces the annular part 24B. In other words, the water-discharging protrusions 40 are portions of the elastic ring 32. Therefore, the water-discharging protrusions 40 are formed of the same material as that of the elastic ring 32, that is, an elastomer material containing magnetic metal powder and ceramic powder.

In this embodiment, as shown in Fig. 3, each water-discharging protrusion 40 has a substantially quadrangular outline, specifically a substantially rhombic outline, when viewed along the axial direction of the second sealing member 26. As shown in Figs. 2 and 4, each of the water-discharging protrusions 40 has a substantially rectangular outline in which one corner is formed in an arc shape when viewed along the lateral direction of the second sealing member 26.

More specifically, as shown in Fig. 3, each water-discharging protrusion 40 has a substantially rhombic outline defined by an inner arc surface 40A, an outer arc line 40B, and two inclined side surfaces 40C and 40D. The outer arc line 40B substantially coincides with the outer peripheral contour of the elastic ring 32 covering the outer peripheral contour of the rigid ring 34 in the second sealing member 26.

As shown in Figs. 2 and 4, each water-discharging protrusion 40 has a substantially quadrangle outline defined by an inner arc surface 40A, a top surface 40E, a curved surface 40G, and a bottom surface 40F. The bottom surface 40F is parallel to the surface 34C of the flange part 34B facing the annular part 24B and lies on the same plane as a surface 32A of the elastic ring 32 facing the annular part 24B. The top surface 40E is parallel to the surfaces 32A and 34C. The curved surface 40G is curved in an arc shape so that the more radially inward the positions on the curved surface 40G, the more distant from the flange part 34B.

The elastic ring 28 of the first sealing member 24 has a curved surface 50 that extends from the cylindrical part 24A to the annular part 24B. The curved surface 50 is curved in an arc shape so that the more radially inward the positions on the curved surface 50, the more distant from the flange part 34B of the second sealing member 26. The curved surface 40G of the water-discharging protrusion 40 faces the curved surface 50 of the first sealing member 24 and is formed substantially parallel to the curved surface 50. The curved surface 50 defines a narrow space 42 in which the water-discharging protrusion 40 having the curved surface 40G can rotate.

Instead of the curved surface 40G of the water-discharging protrusion 40, an inclined surface may be provided such that the more radially inward the positions on the inclined surface, the more distant from the flange part 34B. In this case, the first sealing member 24 may be provided with an inclined surface that is inclined away from the flange part 34B and substantially parallel to the inclined surfaces of the water-discharging protrusions 40.

In Fig. 3, arrow R1 indicates the rotational direction of the second sealing member 26 (rotational direction of the inner race 6) when the automotive vehicle provided with the hub bearing 1 moves forward. The inner arc surface 40A and the outer arc line 40B extend in arc shapes along the rotational direction R1. In other words, each of the inner arc surface 40A and the outer arc line 40B overlaps a circle (not shown) concentric with the sleeve part 34A. On the other hand, the inclined side surface 40C intersects with the rotational direction R1 at an acute angle, whereas the inclined side surface 40D intersects with the rotational direction R1 at an obtuse angle.

As shown in Fig. 2, the first sealing member 24 further includes an annular labyrinth lip 46. The labyrinth lip 46 protrudes from the annular part 24B toward the flange part 34B of the second sealing member 26, but it is not in contact with the second sealing member 26. The labyrinth lip 46 is formed of the elastic ring 28. The labyrinth lip 46 overlaps the multiple water-discharging protrusions 40 in radial directions, and is disposed radially inside the multiple water-discharging protrusions 40.

As described above, foreign matter (including water and dust) may intrude into the space 42 between the annular part 24B of the first sealing member 24 and the elastic ring 32 covering the flange part 34B of the second sealing member 26 (see Fig. 2). However, multiple water-discharging protrusions 40 protrude into the space 42, and each water-discharging protrusion 40 has an inclined side surface 40C that intersects at an acute angle with the rotational direction R1 of the inner race 6 (see Fig. 3). Therefore, as the inner race 6 and the second sealing member 26 rotate, the water in the space 42 flows in the direction opposite to the rotational direction R1 of the inner race 6 and the second sealing member 26 relative to the rotation of the second sealing member 26 along the inclined side surface 40C, as depicted by arrows f1 in Fig. 3. The inclined side surface 40C that intersects with the rotational direction R1 at an acute angle promotes smooth flow of water. The water flowing in this way is quickly discharged from the space 42 through the clearance 36 (see Fig. 2). For this reason, the sealing device 21 has superior ability to protect the hub bearing 1 that is to be sealed off from the water. Furthermore, for the sealing device 21 itself, deterioration, which is accelerated in the presence of water (including muddy water or salt water), is reduced. Since the clearance 36 is annular, water flows out of the space 42 through a part of the clearance 36, whereas air outside the sealing device 21 flows into the space 42 through the other part of the clearance 36. The air flowing into the space 42 promotes the outflow of water from the space 42. In other words, the water-discharging protrusions 40 preferably protrude into the space 42 communicating with the atmosphere. In addition, it reduces the probability that the pressure in the space 42 will become negative and deform the lips 24C and 24D unexpectedly.

In addition, a labyrinth lip 46 is disposed in the space 42 between the annular part 24B of the first sealing member 24 and the flange part 34B of the second sealing member 26 for preventing foreign matter from entering from the outside. Since the labyrinth lip 46 overlaps with the multiple water-discharging protrusions 40 in radial directions, the intrusion route for foreign matter from the outside is complicated, and the ability for sealing against foreign matter is enhanced. The labyrinth lip 46 is provided at the first sealing member 24 and is not in contact with the second sealing member 26. Therefore, the torque applied to the second sealing member 26, and thus to the inner race 6, is small. The labyrinth lip 46 is disposed radially inside the multiple water-discharging protrusions 40, and the foreign matter blocked by the labyrinth lip 46 is discharged from the space 42 along the inclined side surface of the water-discharging protrusion 40 along with the relative rotation of the inner race 6 and the outer race 8.

By providing the radial lips 24C and 24D to the first sealing member 24, it is possible to improve the reliability of blocking foreign matter. As described above, since the sealing device 21 has superior ability to discharge water by the water-discharging protrusions 40, it is not necessary to increase the contact pressure of the radial lips 24C and 24D to the sleeve part 34A of the second sealing member 26. Therefore, it is possible to suppress or reduce the torque caused by sliding of the radial lips 24C and 24D on the second sealing member 26 while improving the ability to discharge water.

As described above, since the sealing device 21 has superior ability to discharge water by the water-discharging protrusions 40, the first sealing member 24 does not have a portion that is in contact with the flange part 34B of the second sealing member 26, for example, an axial lip for preventing intrusion of foreign matter. Therefore, it is possible to eliminate the torque caused by sliding of the portion of the first sealing member 24 to the second sealing member 26. Therefore, the energy efficiency of the automotive vehicle can be increased.

Furthermore, each water-discharging protrusion 40 is located distant from the cylindrical part 24A and the annular part 24B of the first sealing member 24. Therefore, when the inner race 6 rotates, the water-discharging protrusions 40 do not collide with or slide on the first sealing member 24.

In this embodiment, the first sealing member 24 has a curved surface 50, and each water-discharging protrusion 40 has a curved surface 40G, with the curved surface 40G facing the curved surface 50. Since the first sealing member 24 and each of the water-discharging protrusions 40 are provided with the curved surfaces 50 and 40G, foreign matter is unlikely to enter the space 42 between the annular part 24B and the flange part 34B from the outside.

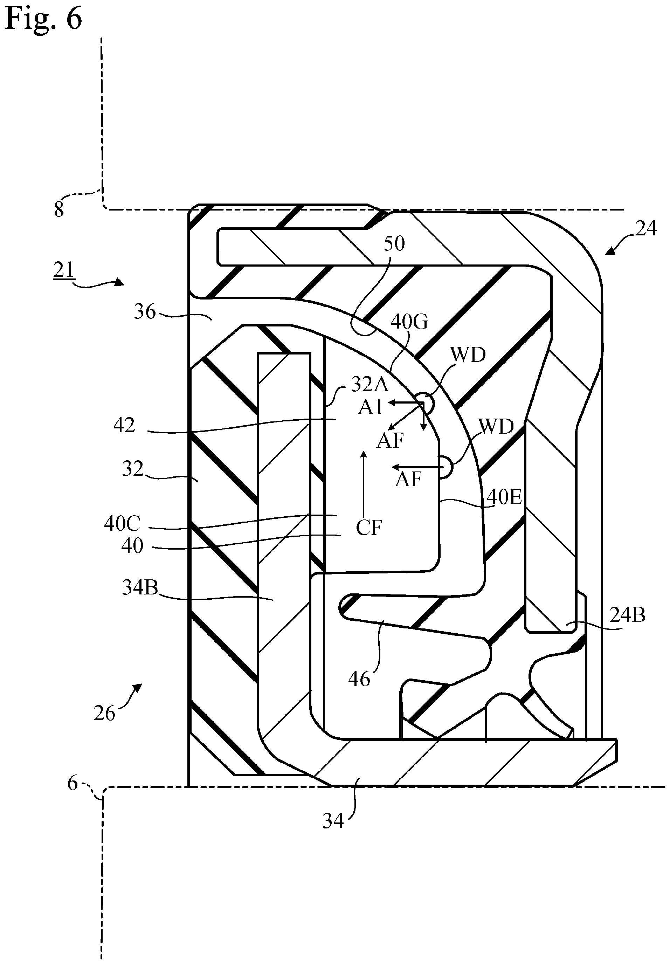

Moreover, the more radially outward the positions on the curved surfaces 40G, the closer to the flange part 34B. Accordingly, the ability to discharge water is high. This advantage will be described with reference to Fig. 6. As shown in Fig. 6, the centrifugal force CF is exerted on the air in the space 42 as the inner race 6 and the second sealing member 26 rotate. The top surfaces 40E of the water-discharging protrusions 40 are located perpendicular to the axial direction of the sealing device 21, and an adhesion force AF is exerted in axial directions on water drops WD attached to the top surfaces 40E. The adhesion force AF is caused by the surface tension or cohesion force of water, and is exerted in the normal directions of the surfaces with which the water is in contact so that the water adheres to the surfaces. The water drops WD attached to the top surfaces 40E are moved radially outward, for example, toward the curved surfaces 40G by the resultant force of the centrifugal force CF, the adhesion force AF, and the gravitational force. The curved surface 40G is inclined with respect to the axial direction of the sealing device 21, and the adhesion force AF is exerted on the water drops WD attached to the curved surfaces 40G in the normal directions of the curved surfaces 40G. The water drops WD attached to the curved surfaces 40G are moved radially outward, that is, toward the annular clearance 36 by the resultant force of the centrifugal force CF, the adhesion force AF, and the gravitational force. In particular, the water drops WD adhering to the curved surfaces 40G are moved toward the clearance 36 by the axial direction component A1 of the adhesion force AF. Therefore, the curved surfaces 40G promote water discharge. This effect can also be achieved by providing the water-discharging protrusion 40 with an inclined surface, instead of the curved surface 40G, the inclined surface being inclined such that the more radially inward the positions on the inclined surface, the more distant from the flange part 34B.

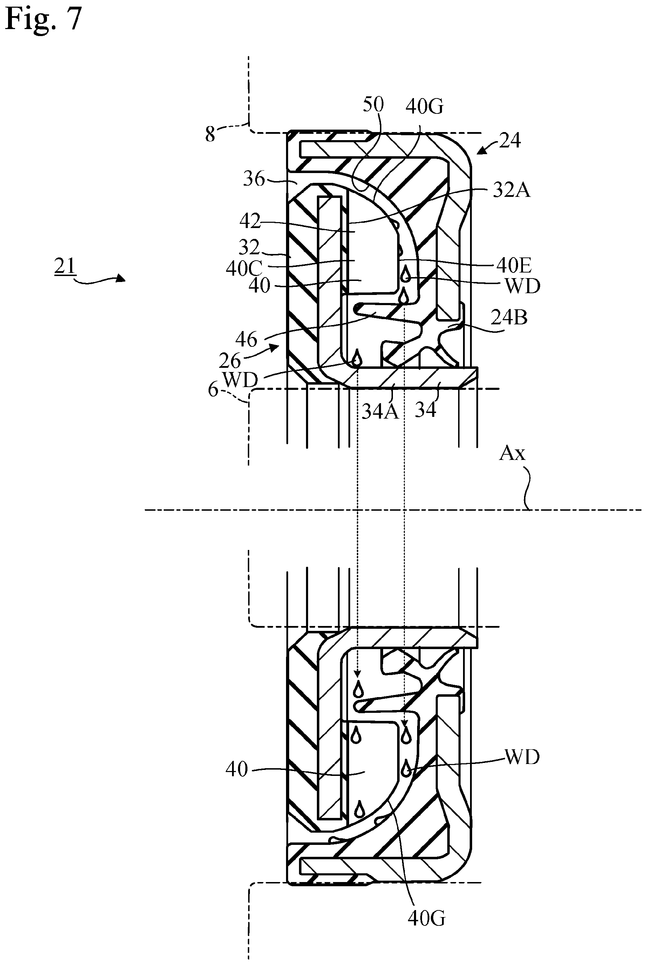

Furthermore, the more radially outward the positions on the curved surface 50 of the first sealing member 24, the closer to the flange part 34B. Accordingly, the ability to discharge water is high. This advantage will be described with reference to Fig. 7. As shown in Fig. 7, the water drops WD remain in the space 42 after the rotation of the inner race 6 and the second sealing member 26 is stopped. Above the central axis Ax of the sealing device 21, many water drops WD fall on the outer peripheral surface of the labyrinth lip 46 through the water-discharging protrusions 40 by the gravitational force. In this embodiment, since the annular labyrinth lip 46 protrudes radially outward from the annular part 24B, water drops WD are likely to gather on the outer peripheral surface of the proximal portion of the labyrinth lip 46. The water drops WD gathering on the outer peripheral surface of the proximal portion of the labyrinth lip 46 fall by the gravitational force through the outer peripheral surface of the labyrinth lip 46 on the curved surface 50 of the first sealing member 24 below the central axis Ax of the sealing device 21, as indicated by a broken-line arrow in the drawing. Water drops WD that are not received by the labyrinth lip 46 above the central axis Ax pass through the outer peripheral surface of the sleeve part 34A of the rigid ring 34 and fall on the curved surface 50 of the first sealing member 24 below the central axis Ax of the sealing device 21. The more radially outward the positions on the curved surface 50 of the first sealing member 24, the closer to the flange part 34B. Therefore, the water drops WD are quickly discharged from the annular clearance 36. This effect can also be achieved by providing the first sealing member 24 with an inclined surface, instead of the curved surface 50, the inclined surface being inclined such that the more radially inward the positions on the inclined surface, the more distant from the flange part 34B.

In this embodiment, as shown in Fig. 3, the length of each water-discharging protrusion 40 in the rotational direction of the inner race 6 is greater than the length of each water-discharging protrusion 40 in the radial direction of the first sealing member 24 and the second sealing member 26. In particular, each water-discharging protrusion 40 has a maximum length (the length between the apex formed by the inner arc surface 40A and the inclined side surface 40C and the apex formed by the outer arc line 40B and the inclined side surface 40D) along the rotational direction R1 of the second sealing member 26 (rotational direction of the inner race 6). Therefore, even if hard foreign matter collides with and damages the water-discharging protrusions 40, or the water-discharging protrusions 40 are worn by the water flow, the entire water-discharging protrusions 40 do not disappear in a short period of time. That is, the water-discharging protrusions 40 have a long service life.

In this embodiment, each water-discharging protrusion 40 protrudes into the space 42 between the annular part 24B of the first sealing member 24 and the flange part 34B of the second sealing member 26. Therefore, as is apparent from Fig. 2, the multiple water-discharging protrusions 40 are arranged in a range within the maximum diameter of the first sealing member 24. For this reason, it is not necessary to increase the size of the sealing device 21, and thus, the hub bearing 1.

In this embodiment, the multiple water-discharging protrusions 40 are formed of the same material as that of the elastic ring 32, that is, an elastomer material containing magnetic metal powder and ceramic powder. Since the water-discharging protrusions 40 contain metal powder and ceramic powder, they have superior durability against the impact of hard foreign matter and superior wear resistance.

In this embodiment, the multiple water-discharging protrusions 40 are integrally mounted on the elastic ring 32 that covers the flange part 34B of the rigid ring 34 of the second sealing member 26. Therefore, since the number of parts is reduced, the assembly of the sealing device 21 is easy.

The method for forming the water-discharging protrusions 40 may be, for example, pressing using a mold or injection molding. In this case, the water-discharging protrusions 40 may be formed simultaneously with the formation of the elastic ring 32. However, the water-discharging protrusions 40 may be joined to the flange part 34B by bonding the water-discharging protrusions 40 with adhesive, or the water-discharging protrusions 40 may be formed by cutting the elastic ring 32.

### SECOND EMBODIMENT

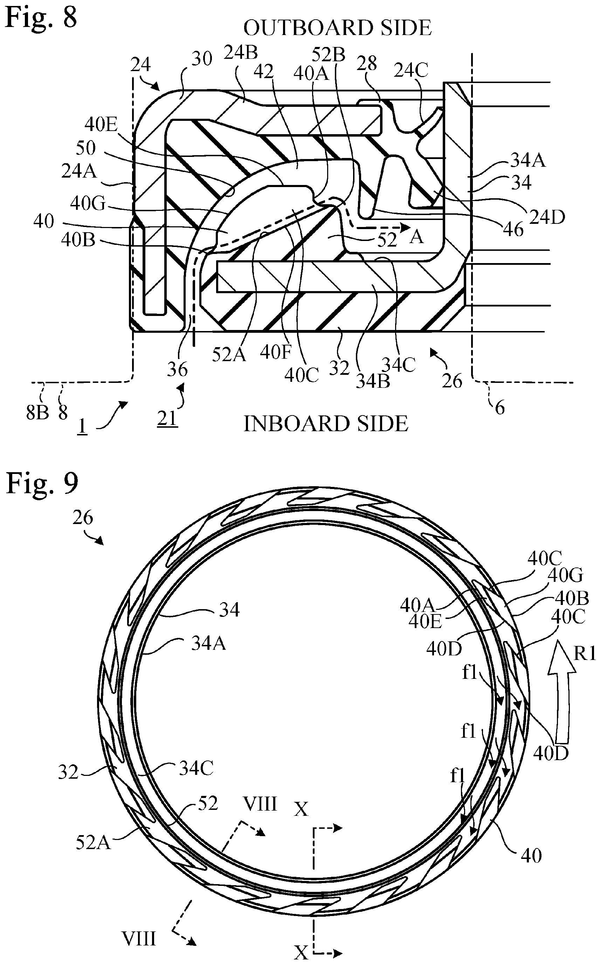

Fig. 8 is a cross-sectional view showing a second sealing member 26 of a sealing device 21 according to a second embodiment of the present invention. In Fig. 8 and the subsequent drawings, the same reference symbols are used to identify components already described, and such components will not be described in detail. The sealing device 21 according to the second embodiment has the first sealing member 24 that is the same as in the first embodiment, and a second sealing member 26 that is different in detail from that of the first embodiment.

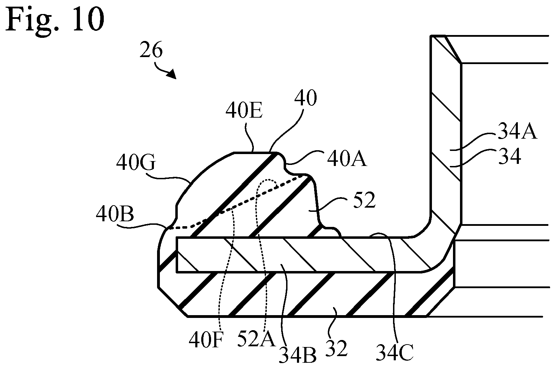

Fig. 9 is a front view of the second sealing member 26, and Fig. 10 is a cross-sectional view taken along line X-X in Fig. 9. Fig. 8 is a cross-sectional view of the sealing device 21 taken along line VIII-VIII in Fig. 9.

As shown in Figs. 8 to 10, in this embodiment, an annular circular protrusion 52 is supported by the second sealing member 26. The circular protrusion 52 protrudes toward the annular part 24B of the first sealing member 24, and has a generally triangular cross-section, as shown in Figs. 8 and 10. The circular protrusion 52 has an inclined surface 52Athat inclines such that the more radially inward the positions on the inclined surface 52A, the more distant from the flange part 34B of the second sealing member 26.

In this embodiment, the circular protrusion 52 is integrally mounted on the portion of the elastic ring 32 that covers the surface 34C of the flange part 34B that faces the annular part 24B. In other words, the circular protrusion 52 is a portion of the elastic ring 32. Therefore, the circular protrusion 52 is formed of the same material as the elastic ring 32, that is, an elastomer material containing magnetic metal powder and ceramic powder, similarly to the water-discharging protrusions 40.

The multiple water-discharging protrusions 40 protrude from the inclined surface 52A of the circular protrusion 52 toward the annular part 24B of the first sealing member 24. That is, the bottom surface 40F of each water-discharging protrusion 40 lies on the same plane as the inclined surface 52A of the circular protrusion 52. The height from the flange part 34B of the rigid ring 34 to the top surface 40E of the water-discharging protrusion 40 is substantially the same as the height in the first embodiment, and therefore, the height from the bottom surface 40F to the top surface 40E (i.e., the protrusion height of the water-discharging protrusions 40) is smaller than the height in the first embodiment.

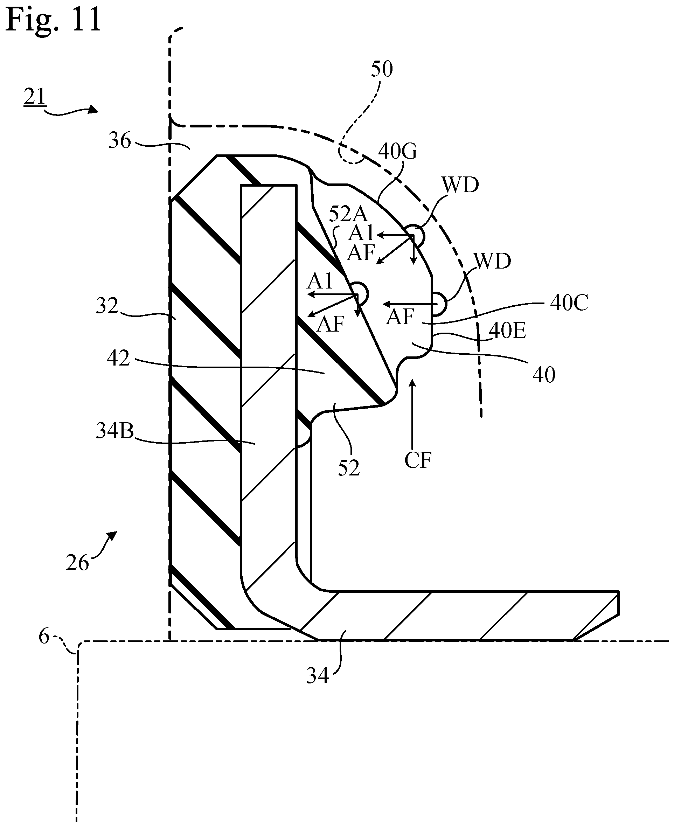

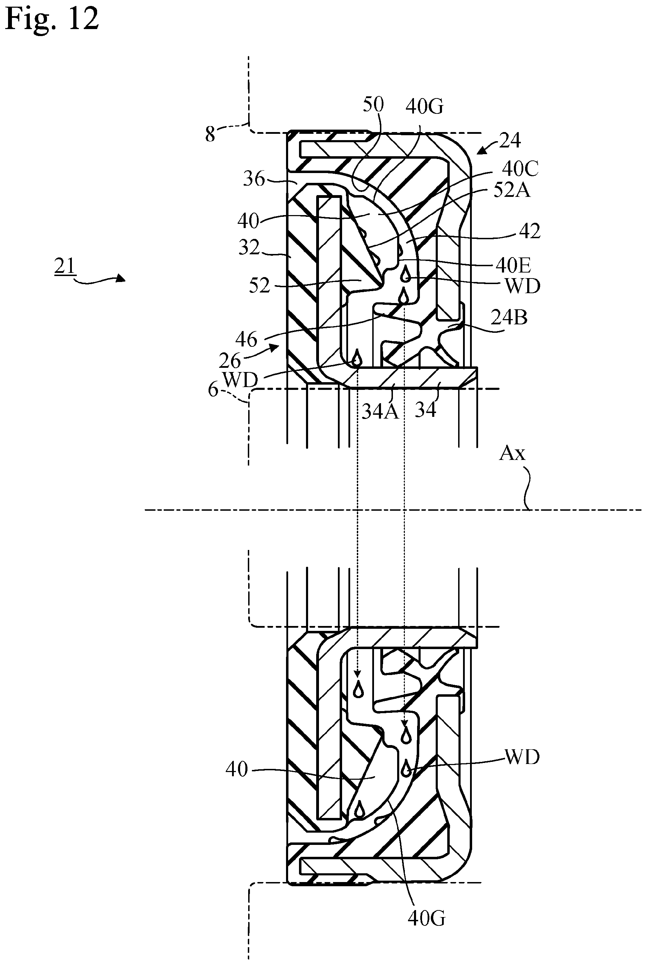

The second embodiment can achieve the same effect as in the first embodiment. For example, the effect of discharging water when the second sealing member 26 rotates in the first embodiment described above with reference to Fig. 6 is also achieved in the second embodiment (see Fig. 11). The effect of discharging water at the time of stopping the rotation of the second sealing member 26 in the first embodiment described above with reference to Fig. 7 is also achieved in the second embodiment (see Fig. 12).

In the second embodiment, the first sealing member 24 has an annular circular protrusion 52, whereas the multiple water-discharging protrusions 40 protrude from the inclined surface 52A of the circular protrusion 52, so that the shape of the space 42 between the annular part 24B and the flange part 34B is more complicated. In particular, as shown in Fig. 8, the circular protrusion 52 radially overlaps the labyrinth lip 46 (the distal end edge 52B of the circular protrusion 52 is located closer to the annular part 24B of the first sealing member 24 than the distal end edge of the labyrinth lip 46). As a result, as indicated by arrow A in Fig. 8, even in the clearances between the intermittently provided water-discharging protrusions 40, the intrusion route for the foreign matter from the outside is more complicated. Therefore, foreign matter is more unlikely to enter the space 42 from the outside.

Furthermore, the inclined surface 52A of the circular protrusion 52 is inclined such that the more radially outward the positions on the inclined surface 52A, the closer to the flange part 34B. Accordingly, the ability to discharge water is high. This advantage will be described with reference to Fig. 11. As shown in Fig. 11, the centrifugal force CF is exerted on the air in the space 42 as the inner race 6 and the second sealing member 26 rotate. The inclined surface 52A of the circular protrusion 52 is inclined with respect to the axial direction of the sealing device 21, and an adhesion force AF is exerted on the water drops WD attached to the inclined surface 52A in the normal direction of the inclined surface 52A. The water drops WD adhering to the inclined surface 52A are moved radially outward, that is, toward the annular clearance 36, by the resultant force of the centrifugal force CF, the adhesion force AF, and the gravitational force. In particular, the water drops WD adhering to the inclined surface 52A are moved toward the clearance 36 by the axial direction component A1 of the adhesion force AF. Therefore, the inclined surface 52A promotes water discharge.

### THIRD EMBODIMENT

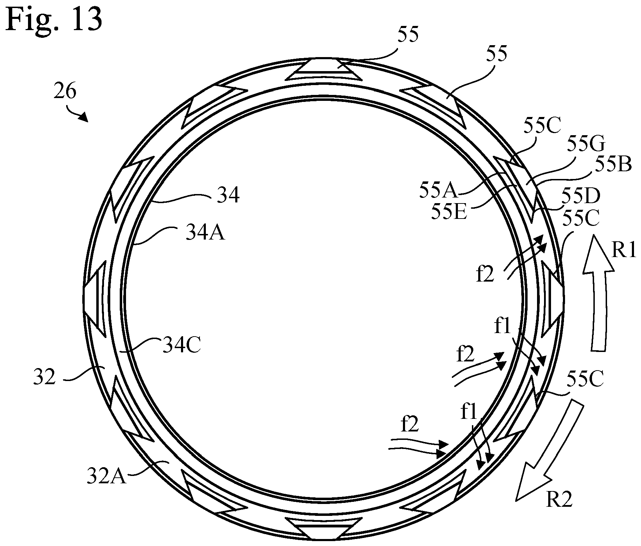

Fig. 13 is a front view showing a second sealing member 26 of a sealing device 21 according to a third embodiment of the present invention. The third embodiment is a modification of the first embodiment, but the second embodiment may be similarly modified.

In the third embodiment, each water-discharging protrusion 55 provided on the flange part 34B of the second sealing member 26 has a substantially trapezoidal outline when viewed along the axial direction of the second sealing member 26. More specifically, each water-discharging protrusion 55 has a substantially trapezoidal outline defined by an inner arc surface 55A, an outer arc line 55B, and two inclined side surfaces 55C and 55D. The lengths of the two inclined side surfaces 55C and 55D are equal. However, the outer arc line 55B may be omitted and the outline of each water-discharging protrusion 55 may be an isosceles triangle. The top surface 55E, the curved surface 55G, and the bottom surface (not shown) of the water-discharging protrusion 55 may be the same as the top surface 40E, the curved surface 40G, and the bottom surface 40F of the first embodiment (see Figs. 2 and 4).

In this embodiment, each water-discharging protrusion 55 has two inclined side surfaces 55C and 55D that intersect respectively at acute angles with the two rotational directions R1 and R2 in which the inner race 6 and the second sealing member 26 rotate. In Fig. 13, arrow R1 indicates the rotational direction of the second sealing member 26 (rotational direction of the inner race 6) when the automotive vehicle provided with the hub bearing 1 moves forward. Arrow R2 indicates the rotational direction of the second sealing member 26 (rotational direction of the inner race 6) when the automotive vehicle provided with the hub bearing 1 is moved backward. The inner arc surface 55A and the outer arc line 55B extend in arc shapes along the rotational directions R1 and R2. In other words, each of the inner arc surface 55A and the outer arc line 55B overlaps a circle (not shown) concentric with the sleeve part 34A. On the other hand, the inclined side surface 55C intersects with the rotational direction R1 at an acute angle and intersects with the rotational direction R2 at an obtuse angle. The inclined side surface 55D intersects with the rotational direction R1 at an obtuse angle and intersects with the rotational direction R2 at an acute angle.

As the inner race 6 and the second sealing member 26 rotate in the rotational direction R1, the water in the space 42 (see Figs. 2 and 4) flows in the direction opposite to the rotational direction R1 of the inner race 6 and the second sealing member 26 relative to the rotation of the second sealing member 26 along the inclined side surface 55C as depicted by arrows f1 in Fig. 13. The inclined side surface 55C that intersects with the rotational direction R1 at an acute angle promotes a smooth flow of water. On the other hand, as the inner race 6 and the second sealing member 26 rotate in the rotational direction R2, the water in the space 42 flows in the direction opposite to the rotational direction R2 of the inner race 6 and the second sealing member 26 relative to the rotation of the second sealing member 26 along the inclined side surface 55D as depicted by arrows f2 in Fig. 13. The inclined side surface 55D that intersects with the rotational direction R2 at an acute angle promotes a smooth flow of water. The water flowing in this way is quickly discharged from the space 42 through the clearance 36 (see Fig. 2). For this reason, the sealing device 21 has a superior ability to protect the hub bearing 1 to be sealed from the water. Furthermore, for the sealing device 21 itself, deterioration, which is accelerated due to the presence of water (including muddy water or salt water), is reduced.

The sealing device 21 according to this modification can be used for both the left and right wheels of an automotive vehicle, and can discharge water by the water-discharging protrusions 50 when the automotive vehicle moves forward and backward. When mounting the sealing device 21 on an automotive vehicle, the human operator does not have to be careful about which wheel the sealing device is for.

The length of each water-discharging protrusion 55 in the rotational directions R1 and R2 (that is, the length of the inner arc surface 55A) is greater than the length of each water-discharging protrusion 55 in radial directions of the sealing device 21 (that is, the distance between the arc surfaces 55A and 55B). Therefore, even if hard foreign matter collides with and damages the water-discharging protrusions 55, or the water-discharging protrusions 55 are worn by the water flow, the entire water-discharging protrusions 55 do not disappear in a short period of time. That is, the water-discharging protrusions 55 have a long service life.

### FOURTH EMBODIMENT

The first to third embodiments described above relate to a sealing device 21 on the inboard side of the hub bearing 1. A fourth embodiment of the present invention relates to a sealing structure including a sealing device 20 on the outboard side of the hub bearing 1.

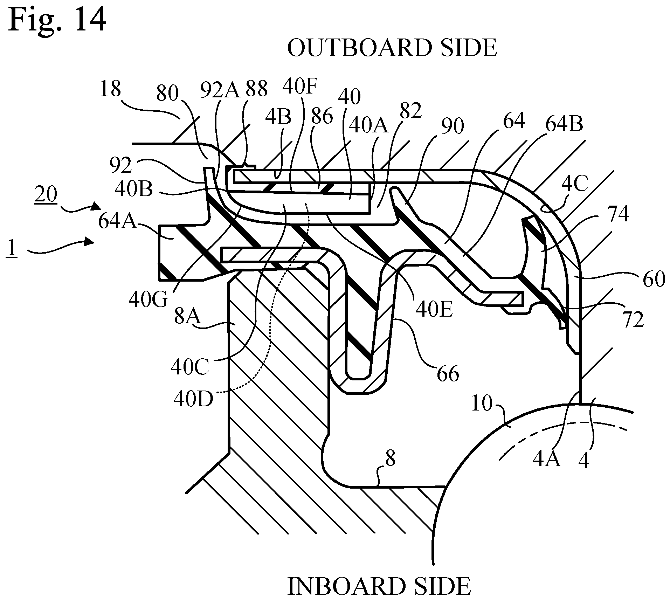

As shown in Fig. 14, the sealing device (sealing member) 20 is located in a gap between the end portion 8A on the outboard side of the outer race 8 of the hub bearing 1 and the hub 4 of the hub bearing 1. The hub 4 has an outer peripheral surface 4A of a cylindrical part in the vicinity of the balls 10, a flange surface 4B expanding radially outward from the outer peripheral surface 4A of the hub 4, and an arc surface 4C connecting the outer peripheral surface 4A and the flange surface 4B. The flange surface 4B is a surface on the inboard side of the outboard side flange 18.

A rotational sealing member 60, which rotates with the hub 4, is fixed to the periphery of the hub 4, although this is not absolutely necessary. The rotational sealing member 60 is made of a rigid material such as metal. Although the sealing device 20 and the rotational sealing member 60 are annular, only the left parts thereof are shown in Fig. 14.

The sealing device 20 is of a composite structure having an elastic ring 64 and a rigid ring 66. The elastic ring 64 is made of an elastic material such as an elastomer. The rigid ring 66 is made of a rigid material, for example, metal, and reinforces the elastic ring 64.

A part of the rigid ring 66 is embedded in the elastic ring 64 and is in close contact with the elastic ring 64. A part of the rigid ring 66 having a U-shaped cross section is engaged by interference fit (that is, is press-fitted) into the inner peripheral surface of the end portion 8 of the outer race 8A.

The elastic ring 64 has an annular part 64A, an inclined connecting part 64B, and lips 72 and 74. The annular part 64A has an annular shape, is in contact with the end surface of the end portion 8A of the outer race 8, and expands radially inward toward the outer peripheral surface 4A of the cylindrical part of the hub 4 so as to be orthogonal to the central axis Ax of the hub bearing 1. The annular part 64A faces the flange surface 4B of the outboard side flange 18.

The inclined connecting part 64B is located radially inside the annular part 64A. In this embodiment, the inclined connecting part 64B extends obliquely from the annular part 64A radially inward and toward the inboard side, is bent to be orthogonal to the central axis Ax of the hub bearing 1, and extends further inwardly in radial directions.

The lips 72 and 74 extend from the inclined connecting part 64B toward the hub 4 of the hub bearing 1. Each of the lips 72 and 74 is made of only an elastic material, and is a thin plate-like annular ring extending from the inclined connecting part 64B. The distal end of each of the lips 72 and 74 is brought into contact with the rotational sealing member 60. Whereas the sealing device 20 is attached to the stationary outer race 8, the hub 4 rotates, so that the lips 72 and 74 slide on the rotational sealing member 60 fixed to the hub 4.

The lip 72 is a radial lip, that is, a grease lip, and extends from the innermost edge of the inclined connecting part 64B and extends toward the cylindrical part of the hub 4 near the balls 10. The distal end of the radial lip 72 is to be in contact with the portion of the rotational sealing member 60 that covers the outer peripheral surface 4A of the cylindrical part. The radial lip 72 extends radially inward and toward the inboard side, and plays a main role in preventing the lubricant from flowing out from the inside of the hub bearing 1.

The lip 74 extends laterally from the inclined connecting part 64B. The lip 74 is an axial lip, that is, a side lip, and extends toward the arc surface 4C of the hub 4. The distal end of the axial lip 74 is in contact with a part of the rotational sealing member 60 covering the arc surface 4C of the hub 4. The lip 74 is a dust lip that plays a main role in preventing foreign matter from flowing into the hub bearing 1 from the outside.

In this embodiment, an annular clearance 80 is provided between the end portion 8A of the outer race 8 and the flange surface 4B of the hub 4. Through the clearance 80, foreign matter may enter the space 82 between the annular part 64A of the sealing device 20 and the flange surface 4B (the space between the annular part 64A and the rotational sealing member 60 in this embodiment). Conversely, foreign matter in the space 82 can be discharged through the clearance 80.

In this embodiment, multiple water-discharging protrusions 40 protruding toward the annular part 64A of the sealing device 20 are supported on the outboard side flange 18 of the hub 4. These water-discharging protrusions 40 have the same shape and the same size, and are arranged at equiangular intervals in the circumferential direction. The water-discharging protrusions 40 protrude into the space 82.

In this embodiment, the multiple water-discharging protrusions 40 are integrally mounted on an elastic ring 86 attached to the outboard side flange 18. The water-discharging protrusions 40 and the elastic ring 86 are made of an elastic material, for example, an elastomer material. The water-discharging protrusions 40 and the elastic ring 86 may be formed of a resin material, an elastomer material, a resin material containing at least one of metal powder and ceramic powder, or an elastomer material containing at least one of metal powder and ceramic powder. In a case in which the water-discharging protrusions 40 and the elastic ring 86 contain at least one of metal powder and ceramic powder, the water-discharging protrusions 40 and the elastic ring 86 have superior durability against the impact of hard foreign matter and have superior wear resistance.

The elastic ring 86 covers the outer edge of the rotational sealing member 60 and further covers a part of the surface of the rotational sealing member 60 on the side of the flange surface 4B. An annular seal protrusion 88 is formed on this part of the elastic ring 86. The annular seal protrusion 88 is sandwiched between the rotational sealing member 60 and the flange surface 4B, and prevents or reduces contact of water with the flange surface 4B, thereby suppressing rusting of the hub 4.

The water-discharging protrusions 40 of this embodiment may be the same as any type of water-discharging protrusions 40 or 55 of the first to third embodiments. For ease of understanding, the reference numerals that were used for the water-discharging protrusions 40 of the first embodiment are used in Fig. 14. The bottom surface 40 of each water-discharging protrusion 40F lies on the same plane as the surface of the elastic ring 86, whereas the top surface 40E is parallel to the flange surface 4B. The curved surface 40G is curved in an arc shape such that the more radially inward the positions on the curved surface 65G, the more distant from the flange surface 4B.

The sealing device 20 further includes an annular labyrinth lip 90. The labyrinth lip 90 protrudes from the annular part 64A of the elastic ring 64 toward the flange surface 4B of the hub 4, but it is not in contact with either the hub 4 or the rotational sealing member 60. The labyrinth lip 90 is formed of the elastic ring 64. The labyrinth lip 90 overlaps the multiple water-discharging protrusions 40 in radial directions, and is disposed radially inside the multiple water-discharging protrusions 40.

The sealing device 20 has an annular outer labyrinth lip 92. The outer labyrinth lip 92 protrudes from the annular part 64A of the elastic ring 64 toward the outboard side flange 18 of the hub 4, but it is not in contact with either the hub 4 or the rotational sealing member 60. The outer labyrinth lip 92 overlaps the multiple water-discharging protrusions 40 in radial directions, and is disposed radially outside the multiple water-discharging protrusions 40.

The outer labyrinth lip 92 has a curved surface 92A such that the more radially inward the positions on the outer labyrinth lip 192, the more distant from the flange surface 4B. The curved surface 40G of each water-discharging protrusion 40 faces the curved surface 92 of the outer labyrinth lip 92A and is formed substantially parallel to the curved surface 92A. The curved surface 92A defines a narrow space 82 in which the water-discharging protrusions 40 having the curved surface 40G can rotate. Instead of the curved surface 40G of each water-discharging protrusion 40, an inclined surface may be provided that inclines such that the more radially inward the positions on the inclined surface, the more distant from the flange surface 4B. In this case, the outer labyrinth lip 92 may have an inclined surface such that the more radially inward the positions on the inclined surface of the outer labyrinth lip 192, the more distant from the flange surface 4B, and the inclined surface of the outer labyrinth lip 192 is substantially parallel to the inclined surface of each water-discharging protrusion 40.

Hereinafter, Fig. 3 relating to the first embodiment may be referred to. In Fig. 3, the second sealing member 26 can be read as the rotational sealing member 60. Arrow R1 can be considered as the rotational direction of the hub 4 when the automotive vehicle provided with the hub bearing 1 moves forward. The inclined side surface 40C intersects with the rotational direction R1 of the hub 4 at an acute angle, whereas the inclined side surface 40D intersects with the rotational direction R1 at an obtuse angle.

As described above, foreign matter (including water and dust) may intrude into the space 82 between the annular part 64A of the sealing device 20 and the outboard side flange 18 of the hub 4. However, multiple water-discharging protrusions 40 protrude into the space 82, and each water-discharging protrusion 40 has an inclined side surface 40C that intersects at an acute angle with the rotational direction R1 of the hub 4 (see Fig. 3). Therefore, as the hub 4 rotates, the water in the space 82 flows in the direction opposite to the rotational direction R1 of the hub 4 relative to the rotation of the hub 4 along the inclined side surface 40C. The inclined side surface 40C that intersects with the rotational direction R1 at an acute angle promotes smooth flow of water. The water flowing in this way is quickly discharged from the space 82 through the clearance 80 (see Fig. 14). For this reason, the sealing structure has superior ability to protect the hub bearing 1 that is to be sealed off from the water. Furthermore, for the sealing device 20, deterioration, which is accelerated in the presence of water (including muddy water or salt water), is reduced. Since the clearance 80 is annular, water flows out of the space 82 through a part of the clearance 80, whereas air outside the sealing device 20 flows into the space 82 through the other part of the clearance 80. The air flowing into the space 82 promotes the outflow of water from the space 82. In other words, the water-discharging protrusions 40 preferably protrude into the space 82 communicating with the atmosphere. In addition, it reduces the probability that the pressure in the space 82 will become negative and deform the lips 74 and 76 unexpectedly.

In addition, a labyrinth lip 90 is disposed in the space 82 between the annular part 64A of the sealing device 20 and the outboard side flange 18 of the hub 4 for preventing foreign matter from entering from the outside. Since the labyrinth lip 90 overlaps with the multiple water-discharging protrusions 40 in radial directions, the intrusion route for foreign matter from the outside is complicated, and the ability to seal against foreign matter is enhanced. The labyrinth lip 90 is provided at the sealing device 20 and is not in contact with the hub 4 nor the rotational sealing member 60. Therefore, the torque applied to the hub 4 is small. The labyrinth lip 90 is disposed radially inside the multiple water-discharging protrusions 40, and the foreign matter blocked by the labyrinth lip 90 is discharged from the space 82 along the inclined side surface of the water-discharging protrusion 40 along with the relative rotation of the hub 4 and the outer race 8.

In this manner, since the sealing structure has superior ability to discharge water by the water-discharging protrusions 40, it is unnecessary to increase the number of dust lips 74 to prevent intrusion of foreign matter, and it is unnecessary to increase the contact pressure of the lips 72 and 74 to the rotational sealing member 60. Therefore, it is possible to suppress or reduce the torque caused by sliding of the lips 72 and 74 on the rotational sealing member 60 while improving the ability to discharge water.

Furthermore, each water-discharging protrusion 40 is located distant from the annular part 64A of the sealing device 20. Therefore, when the hub 4 rotates, the water-discharging protrusions 40 do not collide with or slide on the sealing device 20.

In this embodiment, the outer labyrinth discharge 92 has a curved surface 92A, and each water-discharging protrusion 40 has a curved surface 40G, with the curved surface 40G facing the curved surface 92A. Since the outer labyrinth lip 92 and each of the water-discharging protrusions 40 are provided with the curved surfaces 92A and 40G, foreign matter is unlikely to enter the space 82 from the outside.

Moreover, the more radially outward the positions on the curved surfaces 40G of the water-discharging protrusions 40, the closer to the flange surface 4B. Accordingly, the ability to discharge water is high. This is due to the same reasons as described with reference to Fig. 6 for the first embodiment.

Furthermore, the more radially outward the positions on the curved surface 92A of the outer labyrinth lip 92, the closer to the flange surface 4B. In addition, the sealing device 20 has the labyrinth lip 90. Accordingly, the ability to discharge water is high. This is due to the same reasons as described with reference to Fig. 7 for the curved surface 50 and labyrinth lip 46 of the first embodiment.

In this embodiment, as can be understood from Fig. 3, the length of each water-discharging protrusion 40 in the direction of rotation of the hub 4 is greater than the length of each water-discharging protrusion 40 in the radial direction of the sealing device 20. In particular, each water-discharging protrusion 40 has a maximum length (the length between the apex formed by the inner arc surface 40A and the inclined side surface 40C and the apex formed by the outer arc line 40B and the inclined side surface 40D) along the rotational direction R1 of the hub 4. Therefore, even if hard foreign matter collides with and damages the water-discharging protrusions 40, or the water-discharging protrusions 40 are worn by the water flow, the entire water-discharging protrusions 40 do not disappear in a short period of time. That is, the water-discharging protrusions 40 have a long service life.

In this embodiment, each water-discharging protrusion 40 protrudes into the space 82 between the annular part 64A of the sealing device 20 and the outboard side flange 18 of the hub 4. Therefore, as is apparent from Fig. 14, the multiple water-discharging protrusions 40 are arranged in a range within the maximum diameter of the sealing device 20. For this reason, it is not necessary to increase the size of the sealing structure, and thus, the hub bearing 1.

Features related to the second embodiment (Figs. 8-12) and the third embodiment (Fig. 13) may be incorporated into the fourth embodiment. In other words, an annular circular protrusion 52 may be supported on the outboard side flange 18, in which the circular protrusion 52 has an inclined surface 52A such that the more radially inward the positions on the inclined surface 52A, the more distant from the flange surface 4B. Instead of the water-discharging protrusions 40, water-discharging protrusions 55 suitable for rotation of the hub 4 in both directions may be supported by the outboard side flange 18.

In the fourth embodiment, the rotational sealing member 60 is fixed around the hub 4, but the rotational sealing member 60 may be omitted so that the lips 72 and 74 may be in contact with the hub 4. In this case, the multiple water-discharging protrusions 40 may be directly and integrally mounted on the outboard side flange 18 of the sealing device 20. In this case, the water-discharging protrusions 40 may be formed of the same rigid material as that of the outboard side flange 18, for example, a metal material.

### OTHER MODIFICATIONS

Although embodiments of the present invention have been described above, the foregoing description is not intended to limit the present invention. Various modifications including omission, addition, and substitution of structural elements may be made within the scope of the present invention.

For example, in the above-described embodiments, the hub 4 and the inner race 6 that are inner members are rotating members, and the outer race 8 that is an outer member is a stationary member. However, the present invention is not limited to the above-described embodiments, and can be applied to sealing multiple members that rotate relative to each other. For example, the inner members may be stationary and the outer member may rotate, or all of these members may rotate.

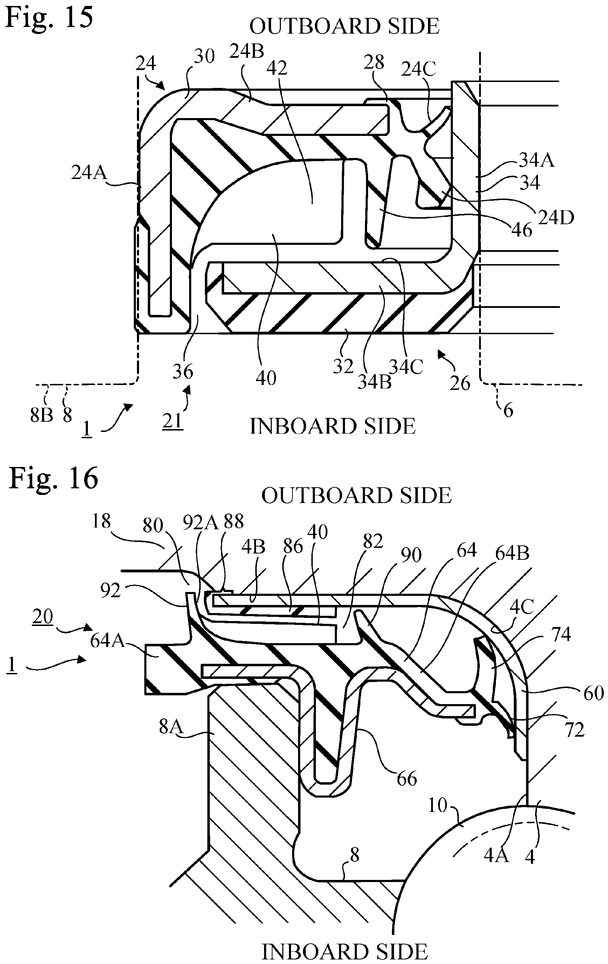

In the first to third embodiments, the water-discharging protrusions 40 and 55 are supported by the second sealing member 26. However, as in the modification shown in Fig. 15, the water-discharging protrusions 40 and 55 may be supported by the first sealing member 24 and may protrude toward the second sealing member 26. The water-discharging protrusions 40 and 55 may be supported by both the second sealing member 26 and the first sealing member 24 to protrude into the space 42. That is, the water-discharging protrusions 40 and 55 may be supported by the rotational member, or may be supported by the stationary member. In any case, the flow of water is promoted by the inclined side surfaces that intersect at an acute angle with the rotational direction of the rotational member.

In the fourth embodiment, the water-discharging protrusions 40 are supported by the hub 4. However, as in the modification shown in Fig. 16, the water-discharging protrusions 40 and 55 may be supported by the sealing device 20 and protrude toward the hub 4. The water-discharging protrusions 40 and 55 may be supported by both hub 4 and sealing device 20 and may protrude into the space 82. That is, the water-discharging protrusions 40 and 55 may be supported by the rotational member, or may be supported by the stationary member. In any case, the flow of water is promoted by the inclined side surfaces that intersect at an acute angle with the rotational direction of the rotational member.

The use of the present invention is not limited to sealing of the hub bearing 1. For example, the sealing device or the sealing structure according to the present invention may be applied to a differential gear mechanism or other power transmission mechanism of an automotive vehicle, a bearing or other support mechanism for a drive shaft of an automotive vehicle, or a bearing or other support mechanism for a rotary shaft of a pump.

Although the rigid ring 30 of the sealing device 21 in the first to third embodiments is a single component, the rigid ring 30 may be replaced with multiple rigid rings separated from each other in radial directions. The rigid ring 66 of the sealing device 20 of the fourth embodiment is also a single component, but the rigid ring 66 may be replaced with multiple rigid rings separated from each other in radial directions.

Aspects of the present invention are also set out in the following numbered clauses:
Clause 1. A sealing device disposed between an inner member and an outer member that rotate relative to each other for sealing a gap between the inner member and the outer member, the sealing device including:
   a first sealing member to be mounted on the outer member, the first sealing member including an annular part expanding radially inward toward the inner member; and
   a second sealing member to be mounted on the inner member, the second sealing member including a flange part expanding radially outward and facing the annular part of the first sealing member,
   multiple water-discharging protrusions being supported by at least one of the first sealing member and the second sealing member, the multiple water-discharging protrusions protruding in a space located between the annular part of the first sealing member and the flange part of the second sealing member and being arranged in a circumferential direction,
   each water-discharging protrusion including an inclined side surface intersecting at an acute angle with a rotational direction in which at least one of the inner member and the outer member rotates,
   the first sealing member including an annular labyrinth lip protruding from the annular part toward the flange part of the second sealing member and being not in contact with the second sealing member, the labyrinth lip overlapping the multiple water-discharging protrusions in radial directions and being disposed radially inside the multiple water-discharging protrusions.
Clause 2. The sealing device according to clause 1, wherein the second sealing member further includes a cylindrical sleeve part surrounding the inner member, and wherein the first sealing member includes two radial lips formed of an elastic material extending toward the sleeve part of the second sealing member.
   According to this clause, it is possible to improve the reliability of blocking foreign matter by providing the radial lips. According to this clause, it is not necessary to increase the contact pressure of the radial lips to the sleeve part of the second sealing member because of superior ability to discharge water by the water-discharging protrusions. Therefore, it is possible to suppress or reduce the torque caused by sliding of the radial lips to the second sealing member while improving the ability to discharge water.
Clause 3. The sealing device according to clause 1 or 2, wherein the first sealing member does not have a portion in contact with the flange part of the second sealing member.
   According to this clause, it is possible to eliminate the torque caused by sliding of the portion of the first sealing member to the second sealing member.
Clause 4. The sealing device according to any one of clauses 1-3, wherein the first sealing member includes a curved surface or an inclined surface, the more radially inward the positions on the curved surface or the inclined surface, the more distant from the flange part of the second sealing member,
   the multiple water-discharging protrusions being supported by the second sealing member, each water-discharging protrusion including a curved surface or an inclined surface, the more radially inward the positions on the curved surface or the inclined surface, the more distant from the flange part of the second sealing member, the curved surfaces or the inclined surfaces of the water-discharging protrusions facing the curved surface or the inclined surface of the first sealing member.
   According to this clause, since the first sealing member and each of the water-discharging protrusions are provided with the curved surfaces or the inclined surfaces, foreign matter is unlikely to enter the space between the annular part and the flange part from the outside. Moreover, the more radially outward the positions on the curved surfaces or the inclined surfaces of the water-discharging protrusions, the closer to the flange part. Accordingly, the ability to discharge water is high.
Clause 5. The sealing device according to clause 4, wherein an annular circular protrusion is supported by the second sealing member, the circular protrusion including an inclined surface, the more radially inward the positions on the inclined surface, the more distant from the flange part of the second sealing member,
   the multiple water-discharging protrusions protruding from the inclined surface of the circular protrusion.
   According to this clause, since each of the annular part and the circular protrusion facing each other is provided with a curved surface or an inclined surface, foreign matter is unlikely to enter the space between the annular part and the flange part from the outside. Since the multiple water-discharging protrusions protrude from the inclined surface of the circular protrusion, foreign matter is more unlikely to enter the space between the annular part and the flange part from the outside. Furthermore, the more radially outward the positions on the inclined surface of the circular protrusion, the closer to the flange part. Accordingly, the ability to discharge water is high.
Clause 6. The sealing device according to any one of clauses 1-5, wherein each of the multiple water-discharging protrusions includes two inclined side surfaces intersecting at an acute angle with two rotational directions in which at least one of the inner member and the outer member rotates, respectively.
   According to this clause, since the two inclined side surfaces intersect at an acute angle with the two rotational directions, either inclined side surface promotes smooth flow of water in either rotational direction. Thus, the sealing device can be used in either rotational direction.
Clause 7. The sealing device according to any one of clauses 1-6, wherein a length of each water-discharging protrusion in the rotational direction is greater than a length of each water-discharging protrusion in radial directions of the first sealing member and the second sealing member.
   According to this clause, even if hard foreign matter collides with and damages the water-discharging protrusions, or the water-discharging protrusions are worn by the water flow, the entire water-discharging protrusions do not disappear in a short period of time. That is, the water-discharging protrusions have a long service life.
Clause 8. The sealing device according to any one of clauses 1 to 7, wherein the multiple water-discharging protrusions are formed of a resin material, an elastomer material, a resin material containing at least one of metal powder and ceramic powder, an elastomer material containing at least one of metal powder and ceramic powder, or a metal material.
   In a case in which the water-discharging protrusions contain at least one of metal powder and ceramic powder, or are formed of a metal material, the water-discharging protrusions have superior durability against the impact of hard foreign matter and superior wear resistance.
Clause 9. The sealing device according to any one of clauses 1-8, wherein the space in which the multiple water-discharging protrusions protrude communicates with the atmosphere.
   According to this clause, the air flowing into the interior of the space promotes the outflow of water from the space.
Clause 10. A sealing structure including:
   an inner member including a cylindrical part and a flange expanding radially outward from the cylindrical part;
   an outer member rotating relative to the inner member; and
   a sealing member mounted on the outer member, the sealing member including an annular part expanding radially inward toward the cylindrical part of the inner member and facing the flange of the inner member,
   multiple water-discharging protrusions being supported by at least one of the inner member and the sealing member, the multiple water-discharging protrusions protruding in a space located between the annular part of the sealing member and the flange of the inner member and being arranged in a circumferential direction,
   each water-discharging protrusion including an inclined side surface intersecting at an acute angle with a rotational direction in which at least one of the inner member and the outer member rotates,
   the sealing member including an annular labyrinth lip protruding from the annular part toward the flange of the inner member and being not in contact with the inner member, the labyrinth lip overlapping the multiple water-discharging protrusions in radial directions and being disposed radially inside the multiple water-discharging protrusions.

   In this sealing structure, water may enter the space between the annular part of the sealing member and the flange of the inner member. However, multiple water-discharging protrusions protrude in the space, and each water-discharging protrusion has an inclined side surface that intersects at an acute angle with the rotational direction in which at least one of the inner member and the outer member rotates. Therefore, together with relative rotation of the inner member and the outer member, the water in the space flows in the opposite direction along the inclined side surface and is rapidly discharged from the space. For this reason, the sealing structure has superior ability to protect the sealed object from water. Furthermore, since the multiple water-discharging protrusions protrude into the space between the annular part of the sealing member and the flange of the inner member, it is not necessary to enlarge the sealing structure for the water-discharging protrusions. A labyrinth lip is disposed in the space between the annular part of the sealing member and the flange of the inner member to prevent foreign matter from entering from the outside. Since the labyrinth lip overlaps with the multiple water-discharging protrusions in radial directions, the intrusion route for foreign matter from the outside is complicated, and the ability for sealing against the foreign matter is enhanced. The labyrinth lip is provided at the sealing member and is not in contact with the inner member. Therefore, the torque applied to the rotational member, i.e., at least one of the inner member and the outer member, is small. The labyrinth lip is disposed radially inside the multiple water-discharging protrusions, and the foreign matter blocked by the labyrinth lip is discharged from the space along the inclined side surface of the water-discharging protrusion along with the relative rotation of the inner member and the outer member.
Clause 11. The sealing structure according to clause 10, wherein the sealing member includes an annular outer labyrinth lip protruding from the annular part toward the flange of the inner member and being not in contact with the inner member, the outer labyrinth lip overlapping the multiple water-discharging protrusions in radial directions and being disposed radially outside the multiple water-discharging protrusions,
   the outer labyrinth lip including a curved surface or an inclined surface, the more radially inward the positions on the curved surface or the inclined surface, the more distant from the flange of the inner member,
   the multiple water-discharging protrusions being supported by the inner member, each water-discharging protrusion including a curved surface or an inclined surface, the more radially inward the positions on the curved surface or the inclined surface, the more distant from the flange of the inner member, the curved surfaces or the inclined surfaces of the water-discharging protrusions facing the curved surface or the inclined surface of the outer labyrinth lip.
   According to this clause, since the outer labyrinth lip and each of the water-discharging protrusions are provided with the curved surfaces or the inclined surfaces, foreign matter is unlikely to enter the space between the annular part and the flange from the outside. Moreover, the more radially outward the positions on the curved surfaces or the inclined surfaces of the water-discharging protrusions, the closer to the flange. Accordingly, the ability to discharge water is high.
Clause 12. The sealing structure according to clause 10 or 11, wherein each of the multiple water-discharging protrusions includes two inclined side surfaces intersecting at an acute angle with two rotational directions in which at least one of the inner member and the outer member rotates, respectively.
   According to this clause, since the two inclined side surfaces intersect at an acute angle with the two rotational directions, either inclined side surface promotes smooth flow of water in either rotational direction. Thus, the sealing device can be used in either rotational direction.
Clause 13. The sealing structure according to any one of clauses 10 to 12, a length of each water-discharging protrusion in the rotational direction is greater than a length of each water-discharging protrusion in radial directions of the sealing member.
   According to this clause, even if hard foreign matter collides with and damages the water-discharging protrusions, or the water-discharging protrusions are worn by the water flow, the entire water-discharging protrusions do not disappear in a short period of time. That is, the water-discharging protrusions have a long service life.
Clause 14. The sealing structure according to any one of clauses 10 to 13, wherein the space in which the multiple water-discharging protrusions protrude communicates with the atmosphere.

According to this clause, the air flowing into the interior of the space promotes the outflow of water from the space.

### REFERENCE SYMBOLS

1: Hub bearing
4: Hub (inner member)
4A: Outer peripheral surface of cylindrical part
4B: Flange surface
6: Inner race (inner member)
8: Outer race (outer member)
8A: End portion
8B: End portion
18: Outboard side flange
20: Sealing device (sealing member)
21: Sealing device
24: First sealing member
24A: Cylindrical part
24B: Annular part
24C, 24D: radial lip
26: Second sealing member
28: Elastic ring
30: Rigid ring
32: Elastic ring
34: Rigid ring
34A: Sleeve part
34B: Flange part
36: Clearance
40, 55: Water-discharging protrusion
42: Space
40C, 55C, 55D: Inclined side surface
40G, 55G: Curved surface
46: Labyrinth Lip
50: Curved Surface
52: Circular protrusion
52A: Inclined surface
55: Water-discharging protrusion
60: Rotational sealing member
64: Elastic ring
64A: Annular part
66: Rigid ring
72: Radial lip
74: Axial lip
80: Clearance
82: Space
86: Elastic ring
90: Labyrinth lip
92: Outer labyrinth lip
92A: Curved surface

## Claims

1. A sealing device disposed between an inner member and an outer member that rotate relative to each other for sealing a gap between the inner member and the outer member, the sealing device comprising:
a first sealing member to be mounted on the outer member, the first sealing member comprising an annular part expanding radially inward toward the inner member; and
a second sealing member to be mounted on the inner member, the second sealing member comprising a flange part expanding radially outward and facing the annular part of the first sealing member,
multiple water-discharging protrusions being supported by at least one of the first sealing member and the second sealing member, the multiple water-discharging protrusions protruding in a space located between the annular part of the first sealing member and the flange part of the second sealing member and being arranged in a circumferential direction,
each water-discharging protrusion comprising an inclined side surface intersecting at an acute angle with a rotational direction in which at least one of the inner member and the outer member rotates,
the first sealing member comprising an annular labyrinth lip protruding from the annular part toward the flange part of the second sealing member and being not in contact with the second sealing member, the labyrinth lip overlapping the multiple water-discharging protrusions in radial directions and being disposed radially inside the multiple water-discharging protrusions.

2. The sealing device according to claim 1, wherein the second sealing member further comprises a cylindrical sleeve part surrounding the inner member, and wherein the first sealing member comprises two radial lips formed of an elastic material extending toward the sleeve part of the second sealing member.

3. The sealing device according to claim 1 or 2, wherein the first sealing member does not have a portion in contact with the flange part of the second sealing member.

4. The sealing device according to any one of claims 1-3, wherein the first sealing member comprises a curved surface or an inclined surface, the more radially inward the positions on the curved surface or the inclined surface, the more distant from the flange part of the second sealing member,
the multiple water-discharging protrusions being supported by the second sealing member, each water-discharging protrusion comprising a curved surface or an inclined surface, the more radially inward the positions on the curved surface or the inclined surface, the more distant from the flange part of the second sealing member, the curved surfaces or the inclined surfaces of the water-discharging protrusions facing the curved surface or the inclined surface of the first sealing member.

5. The sealing device according to claim 4, wherein an annular circular protrusion is supported by the second sealing member, the circular protrusion comprising an inclined surface, the more radially inward the positions on the inclined surface, the more distant from the flange part of the second sealing member,
the multiple water-discharging protrusions protruding from the inclined surface of the circular protrusion.

6. The sealing device according to any one of claims 1-5, wherein each of the multiple water-discharging protrusions comprises two inclined side surfaces intersecting at an acute angle with two rotational directions in which at least one of the inner member and the outer member rotates, respectively.

7. The sealing device according to any one of claims 1-6, wherein a length of each water-discharging protrusion in the rotational direction is greater than a length of each water-discharging protrusion in radial directions of the first sealing member and the second sealing member.

8. The sealing device according to any one of claims 1-7, wherein the space in which the multiple water-discharging protrusions protrude communicates with the atmosphere.
